(19) Europäisches Patentamt
European Patent Office
Office européen des brevets

(11) EP 3 854 854 A1

(12) EUROPEAN PATENT APPLICATION
published in accordance with Art. 153(4) EPC

(43) Date of publication:
**28.07.2021 Bulletin 2021/30**

(21) Application number: **19863746.4**

(22) Date of filing: **20.09.2019**

(51) Int Cl.:
***C08L 101/00*** *(2006.01)* ***B60C 5/14*** *(2006.01)*
***C08L 21/00*** *(2006.01)* ***C08L 23/26*** *(2006.01)*
***C08L 67/00*** *(2006.01)*

(86) International application number:
**PCT/JP2019/037108**

(87) International publication number:
**WO 2020/059878 (26.03.2020 Gazette 2020/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2018 JP 2018177352**

(71) Applicants:
- **The Yokohama Rubber Co., Ltd.**
  **Tokyo 105-8685 (JP)**
- **Mitsubishi Chemical Corporation**
  **Chiyoda-ku**
  **Tokyo 100-8251 (JP)**

(72) Inventors:
- **SATO, Shun**
  **Hiratsuka-shi, Kanagawa 254-8601 (JP)**
- **TOMOI, Shusaku**
  **Hiratsuka-shi, Kanagawa 254-8601 (JP)**
- **KOBAYASHI, Yuuta**
  **Tokyo 100-8251 (JP)**

(74) Representative: **Hoffmann Eitle**
**Patent- und Rechtsanwälte PartmbB**
**Arabellastraße 30**
**81925 München (DE)**

# (54) TIRE INNER LINER AND PNEUMATIC TIRE

(57) Provided is a tire inner liner capable of reducing rolling resistance during tire driving. The present invention provides a tire inner liner that consists of a material containing a thermoplastic elastomer composition consisting of a thermoplastic resin or a thermoplastic-resin component and an elastomer component, the tire inner liner being characterized in that the ratio of the dynamic storage modulus of the material at 60°C with respect to the dynamic storage modulus of the material at 0°C is 0.01-0.3.

EP 3 854 854 A1

## Description

### FIELD

The present invention relates to a tire inner liner and a pneumatic tire. More specifically, the present invention relates to a tire inner liner comprising a material comprising a thermoplastic resin or a thermoplastic elastomer composition, and a pneumatic tire comprising the tire inner liner.

### BACKGROUND

A technique is known where a polymer composition obtained by melt-kneading and dynamically vulcanizing a thermoplastic resin such as polyamide and an elastomer component to thereby allow the elastomer component to form a discontinuous phase is used in a tire inner liner (Japanese Patent No. 3217239).

A technique is known where a thermoplastic resin composition obtained by dispersing modified rubber having an acid anhydride group or an epoxy group, in polyamide and an ethylene-vinyl alcohol copolymer, is used in a tire inner liner (Japanese Patent No. 5909846).

### [CITATION LIST]

### [PATENT LITERATURE]

[PTL 1] Japanese Patent No. 3217239
[PTL 2] Japanese Patent No. 5909846

### SUMMARY

### [TECHNICAL PROBLEM]

An object of the present invention is to provide an inner liner low in rolling resistance in tire travelling as compared with an inner liner using polyamide and an ethylene-vinyl alcohol copolymer.

### [SOLUTION TO PROBLEM]

The present inventors have found that an inner liner produced by using a material where the ratio of the dynamic storage elastic modulus E'(60°C) at 60°C to the dynamic storage elastic modulus E'(0°C) at 0°C is 0.01 to 0.3 can allow for a reduction in rolling resistance in tire travelling, and thus have completed the present invention.

The present invention relates to a tire inner liner comprising a material comprising a thermoplastic resin or a thermoplastic elastomer composition containing a thermoplastic resin component and an elastomer component, wherein the ratio of the dynamic storage elastic modulus at 60°C to the dynamic storage elastic modulus at 0°C of the material is 0.01 to 0.3.

The present invention also relates to a pneumatic tire comprising the tire inner liner.

The present invention includes the following aspects.

[1] A tire inner liner comprising a material comprising a thermoplastic resin or a thermoplastic elastomer composition containing a thermoplastic resin component and an elastomer component, wherein the ratio of the dynamic storage elastic modulus at 60°C to the dynamic storage elastic modulus at 0°C of the material is 0.01 to 0.3.

[2] The tire inner liner according to [1], wherein the dynamic storage elastic modulus E'(30°C) at 30°C and the dynamic storage elastic modulus E'(60°C) at 60°C of the material satisfy expression (1):

$$(\log_{10}E'(60°C) - \log_{10}E'(30°C))/(60 - 30) < -0.015 \ldots (1).$$

[3] The tire inner liner according to [1] or [2], wherein the thermoplastic resin or the thermoplastic resin component is a modified ethylene-vinyl alcohol copolymer.

[4] The tire inner liner according to [3], wherein the modified ethylene-vinyl alcohol copolymer is a polyester-modified ethylene-vinyl alcohol copolymer.

[5] The tire inner liner according to any of [1] to [4], wherein the thermoplastic elastomer composition has a continuous phase and a dispersion phase, the thermoplastic resin component forms a continuous phase, and the elastomer component forms a dispersion phase.

[6] The tire inner liner according to any of [3] to [5], wherein the material further comprises a second thermoplastic resin or thermoplastic elastomer having an elastic modulus at 23°C higher than the elastic modulus at 23°C of the modified ethylene-vinyl alcohol copolymer and having a melting point of 170°C or more.

[7] The tire inner liner according to [6], wherein the second thermoplastic resin or thermoplastic elastomer is a polyester resin or a polyester elastomer.

[8] A pneumatic tire comprising the tire inner liner according to any of [1] to [7].

[ADVANTAGEOUS EFFECTS OF INVENTION]

A pneumatic tire produced by using the tire inner liner of the present invention is low in rolling resistance in tire travelling.

DESCRIPTION OF EMBODIMENTS

The present invention relates to a tire inner liner comprising a material comprising a thermoplastic resin or a thermoplastic elastomer composition containing a thermoplastic resin component and an elastomer component, wherein the ratio of the dynamic storage elastic modulus at 60°C to the dynamic storage elastic modulus at 0°C of the material is 0.01 to 0.3.

The tire inner liner of the present invention comprises a material where the ratio of the dynamic storage elastic modulus at 60°C to the dynamic storage elastic modulus at 0°C is 0.01 to 0.3.

The dynamic storage elastic modulus is hereinafter also referred to as "E'". The dynamic storage elastic modulus at 0°C is hereinafter also referred to as "E'(0°C)". The dynamic storage elastic modulus at 60°C is hereinafter also referred to as "E'(60°C)". Accordingly, the ratio of the dynamic storage elastic modulus at 60°C to the dynamic storage elastic modulus at 0°C can be expressed as E'(60°C)/E'(0°C).

E'(60°C)/E'(0°C) is preferably 0.02 to 0.28, more preferably 0.03 to 0.25. In a case where E'(60°C)/E'(0°C) is too small, the inner liner is too flexible in tire travelling and thus is deteriorated in travelling stability. In a case where E'(60°C)/E'(0°C) is too large, the inner liner is not flexible in tire travelling and the effect of reducing rolling resistance is hardly obtained.

The dynamic storage elastic modulus refers to the real part of the complex elastic modulus obtained from stress-strain characteristics in application of dynamic strain to a viscoelastic body, and corresponds to the elastic term of the viscoelasticity.

The dynamic storage elastic modulus can be determined by a method described in JIS K7198. Specifically, it can be determined as the constant of the real part of the complex elastic modulus determined by applying to a sample, not only the initial elongation, but also the sine wave dynamic strain as the periodic oscillation by a vibration exciter and here measuring the stress and displacement. Such determination in the present invention is performed at an initial elongation of 5%, a frequency of 20 Hz, and a dynamic strain of 0.1% in an atmosphere temperature range from -80°C to 160°C.

The dynamic storage elastic modulus E'(30°C) at 30°C and the dynamic storage elastic modulus E'(60°C) at 60°C of the material constituting the tire inner liner of the present invention preferably satisfy expression (1):

$$(\log_{10}E'(60°C) - \log_{10}E'(30°C))/(60 - 30) < -0.015 \qquad (1)$$

more preferably

$$-0.100 < (\log_{10}E'(60°C) - \log_{10}E'(30°C))/(60 - 30) < -0.018 \qquad (2)$$

even more preferably

$$-0.070 < (\log_{10}E'(60°C) - \log_{10}E'(30°C))/(60 - 30) < -0.020 \qquad (3).$$

The value of ($\log_{10}$E'(60°C) - $\log_{10}$E'(30°C))/(60 - 30) almost corresponds to the gradient at 30°C to 60°C in the temperature-dependent curve of the common logarithm ($\log_{10}$E') of the dynamic storage elastic modulus E'.

A too large value of ($\log_{10}$E'(60°C) - $\log_{10}$E'(30°C))/(60 - 30) (too low gradient) leads to a small effect of reducing rolling resistance in tire travelling, and a too small value (too high gradient) leads to deterioration in stability in tire travelling.

The tire inner liner of the present invention comprises a material comprising a thermoplastic resin or a thermoplastic elastomer composition. The thermoplastic elastomer composition contains a thermoplastic resin component and an elastomer component.

The thermoplastic resin is not particularly limited as long as a material where E'(60°C)/E'(0°C) is 0.01 to 0.3 can be prepared, and is preferably a modified ethylene-vinyl alcohol copolymer.

The modified ethylene-vinyl alcohol copolymer (hereinafter, also referred to as "modified EVOH") refers to a copolymer containing an ethylene unit ($-CH_2CH_2-$) and a vinyl alcohol unit ($-CH_2-CH(OH)-$) as main repeating units and containing any repeating unit other than such repeating units. The modified ethylene-vinyl alcohol copolymer is preferably obtained by reacting a compound for modification with an ethylene-vinyl alcohol copolymer (hereinafter, also referred to as "EVOH"). The modified ethylene-vinyl alcohol copolymer is preferably a polyester-modified ethylene-vinyl alcohol copolymer. The polyester-modified ethylene-vinyl alcohol copolymer refers to one obtained by grafting polyester to a hydroxyl group of an ethylene-vinyl alcohol copolymer. The polyester-modified ethylene-vinyl alcohol copolymer is preferably an aliphatic polyester-modified ethylene-vinyl alcohol copolymer. The aliphatic polyester-modified ethylene-vinyl alcohol copolymer refers to one obtained by grafting an aliphatic polyester to a hydroxyl group of an ethylene-vinyl alcohol copolymer.

The ratio of the content of an EVOH unit forming a stem of the polyester-modified ethylene-vinyl alcohol copolymer to the content of a polyester unit grafted to the stem, i.e. EVOH unit content/polyester unit content, is preferably 40/60 to 99/1, more preferably 60/40 to 95/5, even more preferably 80/20 to 90/10 on a weight ratio. A too low content of the EVOH unit tends to result in deterioration in gas barrier performance. The ratio of the content of the EVOH unit to the content of the polyester unit can be controlled by the loading ratio between EVOH and polyester in a grafting reaction.

The method of producing the polyester-modified ethylene-vinyl alcohol copolymer can be any known method of grafting polyester to EVOH forming a stem, and in particular, a method of ring-opening polymerization of a lactone compound in the presence of EVOH is preferably used.

The lactone compound used is not particularly limited as long as it is a lactone compound having 3 to 10 carbon atoms. Such a lactone compound, when has no substituent, is represented by formula (4). Herein, n is an integer of 2 to 9, and preferably n is 4 to 5.

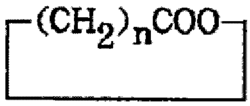

(4)

Specific examples can include β-propiolactone, γ-butyrolactone, ε-caprolactone, and δ-valerolactone. ε-Caprolactone and δ-valerolactone are preferable, and ε-caprolactone is more preferable because it is inexpensive and easily available.

Such lactone compounds can be used in combination of two or more thereof.

A conventionally known ring-opening polymerization catalyst is preferably added in a ring-opening polymerization reaction, and examples thereof can include a titanium-based compound and a tin-based compound. Specific examples include titanium alkoxides such as titanium tetra-n-butoxide, titanium tetraisobutoxide, and titanium tetraisopropoxide; tin alkoxides such as dibutyldibutoxytin; and tin ester compounds such as dibutyl tin diacetate. In particular, titanium tetra-n-butoxide is preferable because it is inexpensive and easily available.

Examples of the method of grafting to EVOH by ring-opening polymerization of the lactone compound include a method of melt-kneading both such compounds in a kneading machine, and examples of the kneading machine here include uniaxial and biaxial extruders, a Banbury mixer, a kneader, and a Brabender.

The temperature and time of such melt-kneading are not particularly limited and may be appropriately selected so as to be any temperature where both such substances are molten and any time where grafting is completed, respectively, and are usually 50 to 250°C and 10 seconds to 24 hours, in particular, 150 to 230°C and 5 minutes to 10 hours.

The content of ethylene in EVOH for use as a raw material is, but not limited to, usually 20 to 60% by mol, preferably 25 to 50% by mol, even more preferably 30 to 45% by mol. A too high content of ethylene leads to deterioration in gas barrier performance, and on the contrary, a too low content of ethylene leads to deterioration in ring-opening polymerization reactivity with the lactone compound.

The degree of saponification of EVOH is, but not limited to, usually not less than 80% by mol, preferably 90 to 99.99% by mol, particularly preferably 99 to 99.9% by mol. A too low degree of saponification tends to lead to deterioration in gas barrier performance.

The melt flow rate (MFR) for use as an index of the molecular weight of EVOH is usually 0.1 to 100 g/10 minutes, preferably 0.5 to 70 g/10 minutes, particularly preferably 1 to 50 g/10 minutes in conditions of 210°C and a load of 2160

g. A too low MFR value tends to lead to deterioration in ring-opening polymerization reactivity with the lactone compound.

EVOH here used may be a mixture of two or more of EVOHs different in content of ethylene, degree of saponification, and MFR as long as such a mixture corresponds to a combination of EVOHs where the average value satisfies the above requirements.

The thermoplastic elastomer composition contains a thermoplastic resin component and an elastomer component. The thermoplastic elastomer composition is preferably one which has a phase structure (so-called sea-island structure) consisting of a continuous phase (matrix) and a dispersion phase and in which the thermoplastic resin component forms such a continuous phase and the elastomer component forms such a dispersion phase.

The thermoplastic resin component constituting the thermoplastic elastomer composition is not particularly limited as long as a material where E'(60°C)/E'(0°C) is 0.01 to 0.3 can be prepared, and examples thereof preferably include the same examples as the above thermoplastic resin. That is, the thermoplastic resin component is preferably a modified ethylene-vinyl alcohol copolymer, more preferably one obtained by reacting a compound for modification with an ethylene-vinyl alcohol copolymer, even more preferably a polyester-modified ethylene-vinyl alcohol copolymer, even more preferably an aliphatic polyester-modified ethylene-vinyl alcohol copolymer.

The elastomer component constituting the thermoplastic elastomer composition is not particularly limited as long as a material where E'(60°C)/E'(0°C) is 0.01 to 0.3 can be prepared, and examples thereof can include diene-based rubber and a hydrogenated product thereof, olefin-based rubber, halogen-containing rubber, silicone rubber, sulfur-containing rubber, and fluororubber.

Examples of such diene-based rubber and hydrogenated product thereof include natural rubber (NR), isoprene rubber (IR), epoxidized natural rubber, styrene-butadiene rubber (SBR), butadiene rubber (BR) (high cis BR and low cis BR), acrylonitrile-butadiene rubber (NBR), hydrogenated NBR, and hydrogenated SBR.

Examples of the olefin-based rubber include ethylene-propylene rubber (EPM), ethylene-propylene-diene rubber (EPDM), maleic acid-modified ethylene-propylene rubber (M-EPM), a maleic anhydride-modified ethylene-$\alpha$-olefin copolymer, an ethylene-glycidyl methacrylate copolymer, a maleic anhydride-modified ethylene-ethyl acrylate copolymer (modified EEA), butyl rubber (IIR), a copolymer of isobutylene and an aromatic vinyl or diene-based monomer, acrylic rubber (ACM), and an ionomer.

Examples of the halogen-containing rubber include halogenated butyl rubber such as brominated butyl rubber (Br-IIR) and chlorinated butyl rubber (C1-IIR), a halogenated isomonoolefin-p-alkylstyrene copolymer (for example, brominated isobutylene-p-methylstyrene copolymer (BIMS)), halogenated isobutylene-isoprene copolymer rubber, chloroprene rubber (CR), hydrin rubber (CHR), chlorosulfonated polyethylene (CSM), chlorinated polyethylene (CM), and maleic acid-modified chlorinated polyethylene (M-CM).

Examples of the silicone rubber include methyl vinyl silicone rubber, dimethyl silicone rubber, and methyl phenyl vinyl silicone rubber. Examples of the sulfur-containing rubber include polysulfide rubber. Examples of the fluororubber include vinylidene fluoride-based rubber, fluorine-containing vinyl ether-based rubber, tetrafluoroethylene-propylene-based rubber, fluorine-containing silicone-based rubber, and fluorine-containing phosphazene-based rubber.

In particular, a halogenated isomonoolefin-p-alkylstyrene copolymer, a maleic anhydride-modified ethylene-$\alpha$-olefin copolymer, an ethylene-glycidyl methacrylate copolymer, and a maleic anhydride-modified ethylene-ethyl acrylate copolymer are preferable from the viewpoint of air blocking properties.

Any compounding agent commonly compounded into a rubber composition, such as other reinforcing agent (filler) (for example, carbon black or silica), softener, anti-aging agent, and processing aid, may be compounded into the elastomer component, as long as the effects of the present invention are not impaired.

The thermoplastic elastomer composition can be produced by melt-kneading the thermoplastic resin component and the elastomer component with, for example, a biaxially kneading extruder, and dispersing the elastomer component as a dispersion phase in such a thermoplastic resin component forming a continuous phase. The weight ratio of the thermoplastic resin component to the elastomer component is preferably, but not limited to, 10/90 to 90/10, more preferably 15/85 to 90/10.

The material constituting the tire inner liner preferably further comprises a second thermoplastic resin or thermoplastic elastomer having an elastic modulus at 23°C higher than the elastic modulus at 23°C of the modified ethylene-vinyl alcohol copolymer and having a melting point of 170°C or more.

Heat resistance can be imparted to the inner liner by incorporating the second thermoplastic resin or thermoplastic elastomer having an elastic modulus at 23°C higher than the elastic modulus at 23°C of the modified ethylene-vinyl alcohol copolymer and having a melting point of 170°C or more.

The elastic modulus corresponds to the proportional constant between the stress and the strain in the elastic deformation region, and refers to the quotient (stress/strain) where the applied external force (stress) is defined as the numerator and the strain generated by the stress is defined as the denominator.

The elastic modulus can be determined from the gradient of the tangent line drawn to the curve in the initial strain region of the stress-strain curve obtained according to JIS K6251 "Tensile Test Method of Vulcanized Rubber", and the elastic modulus in the present invention refers to a tensile elastic modulus.

Examples of the second thermoplastic resin include a polyester resin, a polyamide resin, a polyvinyl alcohol resin, a polyvinyl chloride resin, a polyvinylidene chloride resin, a polyetherimide resin, and a polyacetal resin, and the second thermoplastic resin is preferably a polyester resin. Examples of the polyester resin include a polymethylene terephthalate resin, a polyethylene terephthalate resin, a polybutylene terephthalate resin, a polyethylene naphthalate resin, and a polybutylene naphthalate resin, and the polyester resin is preferably a polybutylene terephthalate resin. The polybutylene terephthalate resin (hereinafter, also referred to as "PBT resin") is a polycondensation product of terephthalic acid and 1,4-butanediol. The polybutylene terephthalate resin here used can be any commercially available product. Examples of such any commercially available product of the polybutylene terephthalate resin include NOVADURAN® manufactured by Mitsubishi Engineering-Plastics Corporation, TORAYCON® manufactured by Toray Industries, Inc., and DURANEX® manufactured by WinTech Polymer Ltd.

Examples of the thermoplastic elastomer having an elastic modulus at 23°C higher than the elastic modulus at 23°C of the modified ethylene-vinyl alcohol copolymer and having a melting point of 170°C or more include a polyester elastomer and a polyamide elastomer, and the thermoplastic elastomer is preferably a polyester elastomer. Examples of the polyester elastomer include a polybutylene terephthalate elastomer. The polybutylene terephthalate elastomer (hereinafter, also referred to as "PBT elastomer") is a thermoplastic elastomer where the hard segment corresponds to polybutylene terephthalate and the soft segment corresponds to aliphatic polyether or aliphatic polyester. The polybutylene terephthalate elastomer here used can be any commercially available product. Examples of such any commercially available product of the polybutylene terephthalate elastomer include PELPRENE® P type and PELPRENE® S type manufactured by Toyobo Co., Ltd., and HYTREL® manufactured by Du Pont-Toray Co., Ltd.

The content of the second thermoplastic resin or thermoplastic elastomer is preferably 0 to 50 parts by weight, more preferably 2 to 45 parts by weight, even more preferably 5 to 40 parts by weight based on 100 parts by weight of the thermoplastic resin or the thermoplastic elastomer composition. A too high content may cause the inner liner not to sufficiently obtain air pressure retainability.

The material constituting the tire inner liner can further contain an acid-modified elastomer. The acid-modified elastomer is contained to thereby impart the advantages of, for example, an enhancement in fatigue durability and an enhancement in followability of adjacent rubber in tire formation. Examples of the acid-modified elastomer include an acid-modified polyolefin-based elastomer and an acid-modified styrene-based elastomer.

Examples of the acid-modified polyolefin-based elastomer include an ethylene-$\alpha$-olefin copolymer, an ethylene-unsaturated carboxylic acid copolymer, or any derivative thereof, modified by unsaturated carboxylic acid or unsaturated carboxylic anhydride. Examples of the ethylene-$\alpha$-olefin copolymer modified by unsaturated carboxylic acid or unsaturated carboxylic anhydride include a maleic anhydride graft-modified product of an ethylene-propylene copolymer, a maleic anhydride graft-modified product of an ethylene-butene copolymer, a maleic anhydride graft-modified product of an ethylene-hexene copolymer, and a maleic anhydride graft-modified product of an ethylene-octene copolymer. Examples of the ethylene-unsaturated carboxylic acid copolymer or the derivative thereof modified by unsaturated carboxylic acid or unsaturated carboxylic anhydride include an ethylene-acrylic acid copolymer modified by unsaturated carboxylic acid or unsaturated carboxylic anhydride, an ethylene-methacrylic acid copolymer modified by unsaturated carboxylic acid or unsaturated carboxylic anhydride, an ethylene-methyl acrylate copolymer modified by unsaturated carboxylic acid or unsaturated carboxylic anhydride, and an ethylene-methyl methacrylate copolymer modified by unsaturated carboxylic acid or unsaturated carboxylic anhydride. In particular, a preferable acid-modified polyolefin-based elastomer is any of a maleic anhydride-modified product of an ethylene-propylene copolymer and a maleic anhydride-modified product of an ethylene-butene copolymer. The acid-modified polyolefin-based elastomer here used can be any commercially available product. Examples of such any commercially available product of the acid-modified polyolefin-based elastomer include TAFMER® MH7010, MP7020, and MP0610 manufactured by Mitsui Chemicals, Inc.

Examples of the acid-modified styrene-based elastomer include a maleic anhydride-modified styrene-ethylene/butylene-styrene copolymer, a maleic anhydride-modified styrene-ethylene/propylene-styrene copolymer, a maleic anhydride-modified styrene-butadiene-styrene copolymer, and a maleic anhydride-modified styrene-isoprene-styrene copolymer, and the acid-modified styrene-based elastomer is preferably a maleic anhydride-modified styrene-ethylene/butylene-styrene copolymer. The acid-modified styrene-based elastomer here used can be any commercially available product. Examples of such any commercially available product of the maleic anhydride-modified styrene-ethylene/butylene-styrene copolymer include TUFTEC® M1943, M1913, and M1911 manufactured by Asahi Kasei Chemicals Co., Ltd., and KRATON® FG1924 manufactured by Kraton Polymers Japan Ltd.

The content of the acid-modified elastomer is preferably 0 to 70 parts by weight, more preferably 10 to 68 parts by weight, even more preferably 15 to 65 parts by weight based on 100 parts by weight of the thermoplastic resin or the thermoplastic elastomer composition. A too high content may cause the inner liner not to sufficiently obtain air pressure retainability.

The material constituting the tire inner liner can further contain an epoxy group-containing elastomer. The epoxy group-containing elastomer is contained to thereby impart the advantages of not only an enhancement in fatigue durability and an enhancement in followability of adjacent rubber in tire formation, but also an enhancement in compatibility of the

thermoplastic resin with the second thermoplastic resin or thermoplastic elastomer.

The epoxy group-containing elastomer refers to an elastomer having an epoxy group.

The elastomer constituting the epoxy group-containing elastomer includes, but is not limited to, an ethylene-α-olefin copolymer, an ethylene-unsaturated carboxylic acid copolymer, and an ethylene-unsaturated carboxylate copolymer. That is, the epoxy group-containing elastomer is preferably an epoxy group-containing ethylene-α-olefin copolymer, an epoxy group-containing ethylene-unsaturated carboxylic acid copolymer, or an epoxy group-containing ethylene-unsaturated carboxylate copolymer. Examples of the ethylene-α-olefin copolymer include an ethylene-propylene copolymer, an ethylene-butene copolymer, an ethylene-hexene copolymer, and an ethylene-octene copolymer. Examples of the ethylene-unsaturated carboxylic acid copolymer include an ethylene-acrylic acid copolymer and an ethylene-methacrylic acid copolymer. Examples of the ethylene-unsaturated carboxylate copolymer include an ethylene-methyl acrylate copolymer, an ethylene-methyl methacrylate copolymer, an ethylene-ethyl acrylate copolymer, and an ethylene-ethyl methacrylate copolymer.

The epoxy group-containing elastomer can be obtained by, for example, copolymerizing an epoxy compound such as glycidyl methacrylate to an elastomer, or epoxidizing some or all unsaturated bonds of an unsaturated bond-containing elastomer by an epoxidizing agent. The content of an epoxy group in the epoxy group-containing elastomer is preferably 0.01 to 5 mol/kg, more preferably 0.1 to 1.5 mol/kg. A too low content of an epoxy group causes the elastomer to be hardly dispersed in the thermoplastic resin, and causes desired fatigue durability to be hardly obtained. A too high content of an epoxy group causes interaction with the thermoplastic resin to be strengthened to lead to an increase in melt viscosity, resulting in deterioration in processability in melt forming. The epoxy group-containing elastomer is commercially available, and any commercially available product can be used. Examples of such any commercially available product include an ethylene-glycidyl methacrylate copolymer BONDFAST® BF-2C manufactured by Sumitomo Chemical Co., Ltd., an epoxy-modified ethylene-methyl acrylate copolymer ESPRENE® EMA2752 manufactured by Sumitomo Chemical Co., Ltd., and epoxy-modified styrene-butadiene-based block copolymers EPOFRIEND® AT501 and CT310 manufactured by Daicel Corporation.

The content of the epoxy group-containing elastomer is preferably 0 to 70 parts by weight, more preferably 10 to 68 parts by weight, even more preferably 15 to 65 parts by weight based on 100 parts by weight of the thermoplastic resin or the thermoplastic elastomer composition. A too high content causes interaction with the thermoplastic resin to be strengthened to lead to an increase in melt viscosity, resulting in deterioration in processability in melt forming.

The material constituting the tire inner liner may comprise any polymer other than the thermoplastic resin or the thermoplastic elastomer composition, the second thermoplastic resin or thermoplastic elastomer, the acid-modified elastomer, and the epoxy group-containing elastomer, as well as various additives, as long as the effects of the present invention are not impaired. Examples of such an additive include a cross-linking agent, an anti-aging agent, a plasticizer, a processing aid, a cross-linking promotion aid, a cross-linking promoter, a reinforcing agent (filler), an antiscorching agent, a peptizing agent, an organic modifier, a softener, and a tackifier.

The thickness of the tire inner liner is not particularly limited as long as the tire inner liner can have its function, and is preferably 10 to 400 μm, more preferably 15 to 350 μm, even more preferably 20 to 300 μm. A too thin tire inner liner is poor in handleability and is easily wrinkled in tire production, thereby possibly causing any failure such as cracking originating from such wrinkle to occur in traveling of a finished tire. A too thick tire inner liner is poor in followability to a rubber composition adjacent in tire production, thereby causing the problem of peeling away of such an inner liner.

The tire inner liner of the present invention can be produced by molding the material into a film according to a molding method such as an inflation molding method or a T-die extrusion method.

The tire inner liner of the present invention can be used in the form of a laminate obtained by laminating a layer of a rubber composition thereon in order that adhesiveness to a rubber member constituting a tire is enhanced.

The present invention also relates to a pneumatic tire comprising the tire inner liner.

The pneumatic tire of the present invention can be produced according to an ordinary method. The pneumatic tire can be produced by, for example, placing the tire inner liner of the present invention or a laminate of the tire inner liner of the present invention and a rubber composition, on a drum for tire formation, sequentially attaching and depositing thereon, members for use in usual tire production, such as a carcass layer, a belt layer, and a tread layer made of unvulcanized rubber, molding the resultant and extracting the drum to provide a green tire, and then heating and vulcanizing the green tire according to an ordinary method.

## EXAMPLES

### (1) Raw materials

Raw materials used in Examples and Comparative Examples below are as follows.

EVOH: ethylene-vinyl alcohol copolymer SoarnoL® H4815B (elastic modulus at 23°C: 1900 MPa, melting point: 158°C) manufactured by Nippon Synthetic Chemical Industry Co., Ltd.

Nylon 6/66: polyamide 6/66 copolymer UBE NYLON® 5023B (elastic modulus at 23°C: 1000 MPa, melting point: 195°C) manufactured by Ube Industries, Ltd.
Modified EVOH (1): SoarnoL® SG743 (aliphatic polyester-modified ethylene-vinyl alcohol copolymer, lowly modified product, elastic modulus at 23°C: 350 MPa, melting point: 110°C) manufactured by Nippon Synthetic Chemical Industry Co., Ltd.
Modified EVOH (2): SoarnoL® SG931 (aliphatic polyester-modified ethylene-vinyl alcohol copolymer, highly modified product, elastic modulus at 23°C: 150 MPa, melting point: 95°C) manufactured by Nippon Synthetic Chemical Industry Co., Ltd.
PBT resin: NOVADURAN® 5010R5 (polybutylene terephthalate resin, elastic modulus at 23°C: 2600 MPa, melting point: 224°C) manufactured by Mitsubishi Engineering-Plastics Corporation
PBT elastomer: PELPRENE® E450B (copolymer of polybutylene terephthalate as hard segment and polyether as soft segment, elastic modulus at 23°C: 1020 MPa, melting point: 222°C) manufactured by Toyobo Co., Ltd.
Acid-modified elastomer: TAFMER® MH7020 (maleic anhydride-modified ethylene-1-butene copolymer, elastic modulus at 23°C: 15 MPa) manufactured by Mitsui Chemicals, Inc.
Epoxy group-containing elastomer: BONDFAST® 2C (ethylene-glycidyl methacrylate copolymer containing 6% by weight of glycidyl methacrylate, elastic modulus at 23°C: 140 MPa) manufactured by Sumitomo Chemical Co., Ltd.

(2) Preparation of materials

Raw materials at each formulation shown in Table 1 and Table 2 were introduced into a biaxially kneading extruder manufactured by Japan Steel Works, Ltd. set to a cylinder temperature which is 20°C higher than the melting point of any material having the highest melting point among polymer components, conveyed to a kneading zone having a retention time set to about 3 to 6 minutes, and melt-kneaded, and a melt-kneaded product was extruded into a strand from a die mounted to a discharge port. The resulting strand-shaped extruded product was pelletized by a pelletizer for resins, thereby providing a pellet-shaped material.

(3) Measurement of dynamic storage elastic modulus

The pellet-shaped material prepared according to the procedure in (2) was molded into a sheet having an average thickness of 1 mm, with a 40 mmφ uniaxial extruder (Pla Giken Co., Ltd.) equipped with a T-die having a width of 200 mm, in extrusion conditions of cylinder and die temperatures of 10°C higher than the melting point of any material having the highest melting point among materials, a cooling roll temperature of 50°C and a pickup rate of 1 m/min.
The resulting sheet was used and cut out to a strip having a width of 5 mm and a length of 60 mm, and the dynamic storage elastic modulus E' was measured with a viscoelasticity spectrometer manufactured by Toyo Seiki Seisaku-sho, Ltd., at a static strain of 5%, a dynamic strain of ±0.1%, and a frequency of 20 Hz in a temperature range from -80°C to 160°C.
The ratio of the dynamic storage elastic modulus at 60°C to the dynamic storage elastic modulus at 0°C, namely, E'(60°C)/E'(0°C) was determined. The ratio is shown in Table 1 and Table 2. The effect of reducing rolling resistance of a tire was observed when the ratio is 0.01 to 0.3.
The value of ($\log_{10}$E'(60°C) - $\log_{10}$E'(30°C))/(60 - 30) was calculated. Each value calculated is shown in Table 1 and Table 2. The effect of reducing rolling resistance of a tire was observed when the ratio is less than -0.015.

(4) Production of film

The pellet-shaped material prepared according to the procedure in (2) was molded into a film having an average thickness of 0.05 mm, with a 40 mmφ uniaxial extruder (Pla Giken Co., Ltd.) equipped with a T-die having a width of 550 mm, in extrusion conditions of cylinder and die temperatures of 10°C higher than the melting point of any material having the highest melting point among materials, a cooling roll temperature of 50°C and a pickup rate of 4 m/min.

(5) Production of tire and measurement of rolling resistance

The film obtained according to the procedure in (4) was placed on the innermost surface of a tire to produce a green tire, and the green tire was then inserted into a mold at a temperature set to 180°C, and vulcanized according to an ordinary method, thereby producing a radial tire 195/65R15.
The resisting force with respect to the tire produced was measured at a drum diameter of 1707 mm, a load of 2725 kgf, and a speed of 50 km/hr, and was defined as the rolling resistance. The resisting force was expressed by an index under the assumption that the rolling resistance in Comparative Example 1 was 100. An index of not less than 100 was graded as no effect, an index of not less than 98 and less than 100 was graded as acceptable, an index of not

less than 95 and less than 98 was graded as good, an index of less than 95 was graded as excellent. Acceptable, good, and excellent grades were determined as exerting the effect of reducing rolling resistance. The measurement values (indices) are shown in Table 1 and Table 2.

Table 1

| | | Comparative Example 1 | Comparative Example 2 | Comparative Example 3 | Example 1 | Example 2 | Example 3 |
|---|---|---|---|---|---|---|---|
| EVOH | parts by weight | 100 | | 80 | | | |
| Nylon 6/66 | parts by weight | | 100 | | | | |
| Modified EVOH (1) | parts by weight | | | | 100 | | 80 |
| Modified EVOH (2) | parts by weight | | | | | 100 | |
| PBT resin | parts by weight | | | 20 | | | 20 |
| PBT elastomer | parts by weight | 20 | | | 20 | 20 | |
| Acid-modified elastomer | parts by weight | 100 | 100 | | 100 | 100 | 100 |
| Epoxy group-containing elastomer | parts by weight | | | 100 | | | |
| E'(60°C)/E'(0°C) | | 0.38 | 0.75 | 0.42 | 0.08 | 0.03 | 0.10 |
| $(\log_{10}E'(60°C) - \log_{10}E'(30°C))/(60-30)$ | | -0.012 | -0.008 | -0.011 | -0.029 | -0.041 | -0.028 |
| Rolling resistance | | 100 | 106 | 103 | 95 | 94 | 96 |

Table 2

| | | Example 4 | Example 5 | Example 6 | Example 7 | Example 8 |
|---|---|---|---|---|---|---|
| EVOH | parts by weight | | | | | |
| Nylon 6/66 | parts by weight | | | | | |
| Modified EVOH (1) | parts by weight | 100 | | | | 80 |

(continued)

| | | Example 4 | Example 5 | Example 6 | Example 7 | Example 8 |
|---|---|---|---|---|---|---|
| Modified EVOH (2) | parts by weight | | 80 | 100 | 100 | |
| PBT resin | parts by weight | | | | | 20 |
| PBT elastomer | parts by weight | 40 | 20 | 30 | 30 | |
| Acid-modified elastomer | parts by weight | 80 | 120 | 70 | 160 | |
| Epoxy group-containing elastomer | parts by weight | | | | | 80 |
| E'(60°C)/E'(0°C) | | 0.12 | 0.04 | 0.05 | 0.07 | 0.20 |
| ($\log_{10}$E'(60°C) - $\log_{10}$E'(30°C))/(60-30) | | -0.034 | -0.036 | -0.032 | -0.030 | -0.016 |
| Rolling resistance | | 96 | 94 | 95 | 95 | 98 |

INDUSTRIAL APPLICABILITY

The tire inner liner of the present invention can be suitably utilized in production of a pneumatic tire.

## Claims

1. A tire inner liner comprising a material comprising a thermoplastic resin or a thermoplastic elastomer composition containing a thermoplastic resin component and an elastomer component, wherein the ratio of the dynamic storage elastic modulus at 60°C to the dynamic storage elastic modulus at 0°C of the material is 0.01 to 0.3.

2. The tire inner liner according to claim 1, wherein the dynamic storage elastic modulus E'(30°C) at 30°C and the dynamic storage elastic modulus E'(60°C) at 60°C of the material satisfy expression (1):

$$(\log_{10}E'(60°C) - \log_{10}E'(30°C))/(60 - 30) < -0.015 \ldots (1).$$

3. The tire inner liner according to claim 1 or 2, wherein the thermoplastic resin or the thermoplastic resin component is a modified ethylene-vinyl alcohol copolymer.

4. The tire inner liner according to claim 3, wherein the modified ethylene-vinyl alcohol copolymer is a polyester-modified ethylene-vinyl alcohol copolymer.

5. The tire inner liner according to any one of claims 1 to 4, wherein the thermoplastic elastomer composition has a continuous phase and a dispersion phase, the thermoplastic resin component forms a continuous phase, and the elastomer component forms a dispersion phase.

6. The tire inner liner according to any one of claims 3 to 5, wherein the material further comprises a second thermoplastic resin or thermoplastic elastomer having an elastic modulus at 23°C higher than the elastic modulus at 23°C of the modified ethylene-vinyl alcohol copolymer and having a melting point of 170°C or more.

7. The tire inner liner according to claim 6, wherein the second thermoplastic resin or thermoplastic elastomer is a polyester resin or a polyester elastomer.

8. A pneumatic tire comprising the tire inner liner according to any one of claims 1 to 7.

**INTERNATIONAL SEARCH REPORT**

International application No. PCT/JP2019/037108

A. CLASSIFICATION OF SUBJECT MATTER
Int.Cl. C08L101/00(2006.01)i, B60C5/14(2006.01)i, C08L21/00(2006.01)i, C08L23/26(2006.01)i, C08L67/00(2006.01)i

According to International Patent Classification (IPC) or to both national classification and IPC

B. FIELDS SEARCHED

Minimum documentation searched (classification system followed by classification symbols)
Int.Cl. C08L101/00, B60C5/14, C08L21/00, C08L23/26, C08L67/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| PX | WO 2019/116673 A1 (THE YOKOHAMA RUBBER CO., LTD.) 20 June 2019, claims 1-8, examples 7, 8 (Family: none) | 1-8 |
| EA | JP 2019-182969 A (THE YOKOHAMA RUBBER CO., LTD.) 24 October 2019, claims 1, 4-6, examples 9, 10 (Family: none) | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 November 2019 (25.11.2019) | 03 December 2019 (03.12.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No. PCT/JP2019/037108

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-245318 A (THE YOKOHAMA RUBBER CO., LTD.) 09 December 2013, claims 1, 6, examples 1-6 & US 2015/0133605 A1 claims 1-20, examples 1-6 & WO 2013/179691 A1 & EP 2857451 A1 & CN 104334634 A | 1-8 |
| A | JP 2017-213785 A (BRIDGESTONE CORPORATION) 07 December 2017, claim 1, example 1 (Family: none) | 1-8 |
| A | JP 2016-7878 A (TOYO TIRE AND RUBBER CO., LTD.) 18 January 2016, claims 1-3 (Family: none) | 1-8 |

Form PCT/ISA/210 (continuation of second sheet) (January 2015)

**INTERNATIONAL SEARCH REPORT**

International application No.
PCT/JP2019/037108

· Concerning support requirements

From the description of the detailed description of the invention of this application, the purpose of the invention of this application is to provide an inner liner having lower rolling resistance when running tires than an inner liner using polyamide or ethylene-vinyl alcohol copolymer (paragraph [0005]).

As a means for achieving the purpose, claim 1 discloses an "inner liner for tires, characterized by comprising a material including a thermoplastic elastomer composition including a thermoplastic resin or a thermoplastic resin component and an elastomer component, wherein a ratio of a dynamic storage elastic modulus of the material at 60°C to a dynamic storage elastic modulus of the material at 0°C is 0.01-0.3."

Here, it is clear that any thermoplastic resin or any thermoplastic elastomer may not be used as the thermoplastic resin or the thermoplastic resin component and the elastomer component and the specific ratio of dynamic storage elastic modulus is not attained depending on the type of resin.

Thus, in the detailed description of the invention of this application, only the case in which as the thermoplastic resin or the thermoplastic resin component and the elastomer component, an aliphatic polyester-modified ethylene-vinyl alcohol copolymer, a PBT resin or a PBT elastomer, and a maleic anhydride-modified ethylene-1-butene copolymer or an ethylene-glycidyl methacrylate copolymer are used is determined to achieve the specific ratio and also achieve the purpose of the invention of this application (table 1, 2).

In addition, the description of claim 1 does not concretely specify the type(s) of the "thermoplastic resin or the thermoplastic resin component and the elastomer component," and since only the case in which as the thermoplastic resin or the thermoplastic resin component and the elastomer component, an aliphatic polyester-modified ethylene-vinyl alcohol copolymer, a PBT resin or a PBT elastomer, and a maleic anhydride-modified ethylene-1-butene copolymer or an ethylene-glycidyl methacrylate copolymer are used (table 1, 2) corresponds to the scope disclosed so as to be able to actually solve the problem as described above, the invention of this application does not comply with the requirements for support.

Thus, the prior art search was carried out by assuming that, on the basis of the description (Examples) of the detailed description of the invention of this application, the "thermoplastic resin or the thermoplastic resin component and the elastomer component" is an aliphatic polyester-modified ethylene-vinyl alcohol copolymer, a PBT resin or a PBT elastomer and a maleic anhydride-modified ethylene-1-butene copolymer or an ethylene-glycidyl methacrylate copolymer.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3217239 B
- JP 5909846 B